# EUROPEAN PATENT SPECIFICATION

(11) **EP 0 349 757 B1**
(45) Date of publication and mention of the grant of the patent: **17.07.1996**
(21) Application number: 89109786.7
(22) Date of filing: 31.05.1989
(51) Int. Cl.: G06F 12/10

(54) **Apparatus and method for enhanced virtual to real address translation for accessing a cache memory unit**
Einrichtung und Verfahren zur verbesserten Umsetzung von virtueller zu realer Adresse für Cache-Speicherzugriff
Dispositif et méthode de traduction d'adresse virtuelle en adresse réelle améliorée pour accéder à une mémoire cache

(30) Priority: 07.07.1988 US 203490
(43) Date of publication of application: 10.01.1990
(73) Proprietor: Bull HN Information Systems Inc., Billerica, MA 01821-4186 (US)
(72) Inventor: Rabins, Leonard, Scottsdale AZ 85251 (US)
(74) Representative: Dost, Wolfgang, Dr.rer.nat., Dipl.-Chem.

(56) References cited:
- EP-A- 0 206 050
- JP-A-59 075 482
- US-A- 4 170 039
- US-A- 4 332 010
- US-A- 4 400 774
- IBM TECHNICAL DISCLOSURE BULLETIN vol. 30, no. 10, March 1988, New York, US, pp. 1-4; "FAST CACHE ACCESS BASED ON MOST RECENTLY USED HITS"

## Description

### BACKGROUND OF THE INVENTION

### 1. Field of the Invention

This invention relates generally to the cache memory units associated with central processing units of data processing systems and, more particularly, to the accessing of the cache memory unit by the central processing unit.

### 2. Description of the Related Art

In the modern data processing system, each signal group has an address associated therewith. The address is used for identifying a location in the data processing system main memory unit and can act as an identifier of the signal group itself. In practice, a signal group can have at least two addresses (i.e., identifiers), a virtual address, the address by which the central processing unit identifies the signal group, and a real address, the address which identifies a particular location in the data processing system main memory unit.

The modern data processing system typically includes a cache memory unit associated with the central processing unit. The cache memory unit acts as a buffer mechanism between the relatively slow retrieval of signal groups from the main memory unit and the immediacy requirement of the central processing unit for requested signal groups. The cache memory unit stores signal groups that have a high probability of requirement by the central processing unit. The location in which a signal group is stored in a cache memory unit is related to the real address as will be clear to those familiar with the related art.

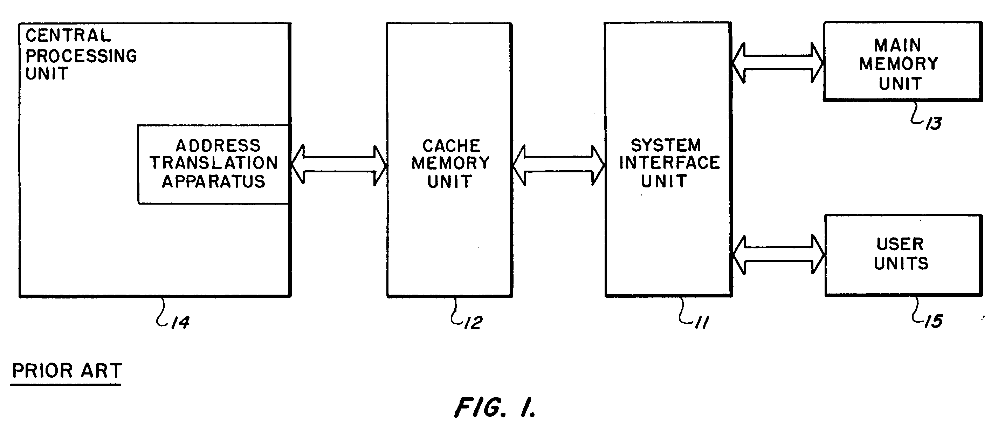

Referring to Fig. 1, a typical data processing system is illustrated. The main memory unit 13 stores the data signal groups required by the central prccessing unit 14 to execute the desired procedures. Signal groups with a high probability for requirement by the central processing unit 11 from the main memory unit 13 or a user unit 15 are transferred through a system interface unit 11 to the cache memory unit 12. In some data processing system architectures, the signal groups are transferred over a system bus, thereby requiring an interface unit for each component interacting with the system bus. The signal groups are stored in the cache memory unit 12 until requested by central processing unit 14. To retrieve the correct signal group, address translation apparatus 141 converts the virtual address, used by the central processing unit 14 to identify the signal group, to the real address used for that signal group by the remainder of the data processing system to identify the signal group. The address translation apparatus is typically initialized and maintained by the data processing system operating system. After processing in the central processing unit 14, the signal group is returned tc the cache memory unit 12 at an address determined by the address translation apparatus and consequently transferred to the user unit 15 or main memory unit 13, as specified by the program. It will be clear to those familiar with data processing systems that the foregoing description is a synopsis, data processing systems being more complicated and having alternate embodiments differing from the foregoing description. This description is provided as a context for understanding the present invention.

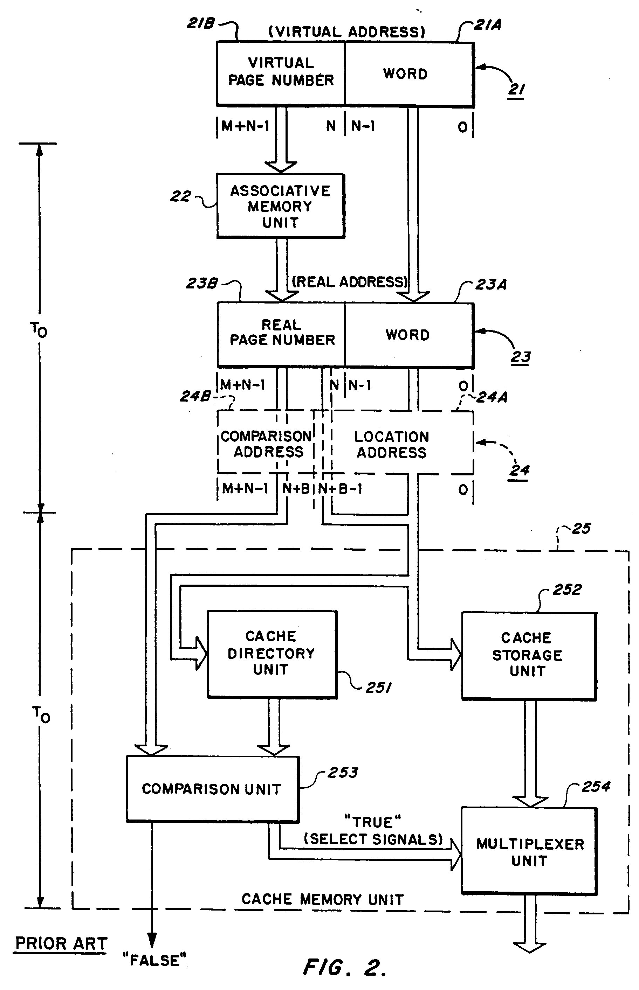

Referring next to Fig. 2, the process of accessing a selected signal group in a cache memory unit 25 by the central processing unit 14 according to the prior art is illustrated. A virtual address 21 of a signal group to be accessed is provided by the central processing unit, typically in a register 23. The virtual address includes at least two portions, a WORD portion 21A consisting of n logic bit positions and a VIRTUAL PAGE NUMBER portion 21B consisting of m logic bit positions. To determine the real address stored in register 23, the WORD portion 21A of the virtual address 21 is used, unchanged, as the WORD portion 23A, while the VIRTUAL PAGE NUMBER portion 21B of the virtual address is applied to an associative memory 22. The signal group accessed in the associative memory 22 as a result of the application of the VIRTUAL PAGE NUMBER portion 21B thereto becomes the m logic bits of the REAL PAGE NUMBER portion 23B stored in register 23. This address translation is typically implemented to be completed in one clock cycle T₀. The real address stored in register 23 is now used to access the contents of the cache memory unit 25. To the n bit positions of the WORD portion 23A of the real address are added b bits from the REAL PAGE NUMBER portion 23B to form a LOCATION address and the LOCATION address is applied to address in terminals of cache directory unit 251 and the address in terminals of cache storage unit 252. At this location, identified by the LOCATION address, in the cache storage unit can be, under appropriate conditions, the signal group which is the signal group required by the central processing unit. At this location, identified by the LOCATION address, in the cache directory unit is stored the signal group corresponding to the logic signals stored in the m-b bit positions of the REAL PAGE NUMBER portion 23B, generally referred to as the COMPARISON address, of the real address of the signal group stored in the addressed location of the cache storage unit. In other words, the location address and the (COMPARISON) address signal group stored in the cache directory unit together form the address of the signal group stored at the corresponding location in the cache storage unit. As a result of applying the LOCATION address to the cache storage unit 252, the plurality of signal groups, generally referred to as levels, stored at the addressed location are applied to multiplexer unit 254. As a result of the LOCATION address being applied to the cache directory unit 251, a signal group stored therein is compared with the remaining m-b signals of the REAL PAGE NUMBER portion 23B of the real address 23 in comparison unit 253. When the comparison results in a TRUE signal, then the signal group at the LOCATION address is identified by the real address 23 and a selected signal group (or level identified by signals from the comparison unit) is transferred by multiplexer unit 254 to the central processing unit. When comparison results in generation of a FALSE signal, this signal is transmitted to the central processing unit for appropriate response, typically retrieval of the identified signal group from the main memory unit. The cache memory unit access requires a second system clock cycle T₀.

As will be clear to those skilled in the art of cache memory unit technology, the plurality of signal groups (or levels) stored at each location in the cache storage unit is used to reduce the time needed to retrieve a signal group from the cache memory unit. A desirable improvement would be the storage of a single signal group at each memory location.

In the related art, U.S. Patent 3,979,726; U.S. Patent 4,264,953 and U.S. Patent 4,669,043 discuss the use of virtual addresses in combination with cache memory units, but do not describe techniques for speeding the translation of virtual addresses to real addresses. U.S. Patent 4,332,010 describes a cache memory unit in which the location address is the WORD (non-translatable) portion, thereby limiting the size of the cache memory unit. U.S. Patent 3,723,976; U.S. Patent 4,612,612 and U.S. Patent 4,682,281 contain apparatus responsive to virtual addresses and apparatus responsive to real addresses for accessing cache memory signal groups, thereby greatly expanding the apparatus and the complexity of the data processing system.

The U.S. patent 4,400,774 describes a computer system, as in the precharacterizing part of claim 1, having a cache memory and using virtual addressing, wherein the effectiveness of the cache is improved by storing a subset of the least significant real address bits obtained by translation of a previous virtual address and by using this subset in subsequent cache addressing operations. The subset of the least significant bits of the latter word address bits represent the address needed for accessing the cache. In order to increase cache memory performance, the cache memory comprises a cache address unit which stores the subset of the real address bits from the address translation buffer. These stored address bite are used in subsequent operations along with the word address bits for accessing the cache memory until the stored address bits no longer equal the current subset of least significant real address bits transmitted from the address translation buffer. When the stored address bits no longer equal the current subset, the cache address unit then stores the current subset; and the cache memory is reaccessed utilizing the word address bits and current subset.

A synonym detection and handling mechanism is disclosed for a cache directory utilizing virtual addressing in data processing systems in the U.S. patent 4,332,010. The cache "synonym problem" occurs when the cache address uses bits from the translatable field of the logical address. A synonym detection circuit simultaneously interprets all directory compare signals and determines if a principle hit, synonym hit or a miss occurred in the cache for each request. If a synonym hit is detected, the group identifier bits for the group having the hit are concatenated with the non-translatable bits used as the cache address for locating the required cache data. Synonyms may, for example, be caused by (i) requests which switch between virtual and real addresses for the same data, or (ii) by one user addressing a line of data with one virtual address and another user addressing the same line with a different virtual address which locates a different class in the cache.

The Japanese patent application JP-A-59 075482 aims at effectively accessing a buffer storage having a capacity possible for designation by a logical address at a high speed, by providing a part of a previous physical address to the logical address. When the logical address set to a register 41 and that of a conversion index buffer 42 based thereupon are coincident, a comparator 43 applies a set signal to selecting circuit 52. Further, when the previous physical address of a register 44 accessing the address array 49 and the buffer storage 53 and the physical address from the buffer 42 are coincident, the fetch of the array 49 and the storage 53 is made effective via a comparator 48. Further, the physical address from each way of the array 49 and that from the buffer 42 are compared by comparators 50 and 51 and one way of the storage 53 is selected according to the result of the comparison.

A need has been felt for apparatus and an associated method expediting the access of signal groups stored in a cache memory unit with real addresses in response to virtual address access requests from the central processing unit.

### FEATURES OF THE INVENTION

It is an object of the present invention to provide an improved data processing system.

It is a feature of the present invention to provide an improved technique for accessing a cache memory unit of a data processing system.

It is another feature of the present invention to expedite access to signal groups identified by a real address and stored in a cache memory unit when a signal group identified by a virtual address is required by a central processing unit.

It is yet another feature of the present invention to provide an improved virtual to real address translation for use with a cache memory unit.

It is a more particular feature of the present invention to use a portion of the virtual address to determine a trial address for the cache directory unit and to determine by the time that the contents of the cache directory unit are available whether the trial address is correct.

The above objects are achieved in the cache memory unit by an apparatus which embodies the characteristic features of claim 1 and by a method which is characterized by the method steps of claim 5. Further advantageous embodiments may be taken from the subclaims.

The novel features of the invention together with further objects and advantages will be better understood from the following summary of the invention and the detailed description of the preferred embodiment when considered in connection with the accompanying drawings.

### SUMMARY OF THE INVENTION

A small associative memory, responsive to at least a portion of the virtual address, is provided that stores trial bits of the cache memory unit location address to be used until the translation of the virtual page number to the real page number can provide the correct bits of the cache memory location address. The stored bits are used, in conjunction with the location address logic bits that do not require translation, to access a location in the cache directory unit prior to the development of the real address required in such an access. When the contents of the cache directory unit are available for comparison, the translation from the virtual address is complete. The translated portion of the real address that is to be used in the comparison with the signal group from the cache directory unit is available and the comparison can be performed when the stored bits used in the cache memory unit location address are the same as the translated bits. When the trial and the translated bits of the location address are the same and the comparison of the real address translated logic signals is the same as the corresponding address logic signals stored in the cache directory unit, then the contents of the cache storage unit are the desired signal group. When the stored and translated location address logic signals are not identical, then the real address, available from translation procedure, is applied to the cache memory unit in mode of operation similar to the typical cache memory unit operation.

### BRIEF DESCRIPTION OF THE DRAWINGS

Figure 1 is a block diagram of a typical data processing system capable of using the present invention.

Figure 2 is a flow diagram illustrating the virtual to real address translation for use with a cache memory unit according to the prior art.

Figure 3 is a flow diagram illustrating the virtual to real address translation for use with a cache memory unit according to the present invention.

### DESCRIPTION OF THE PREFERRED EMBODIMENT

### 1. Detailed Description of the Figures

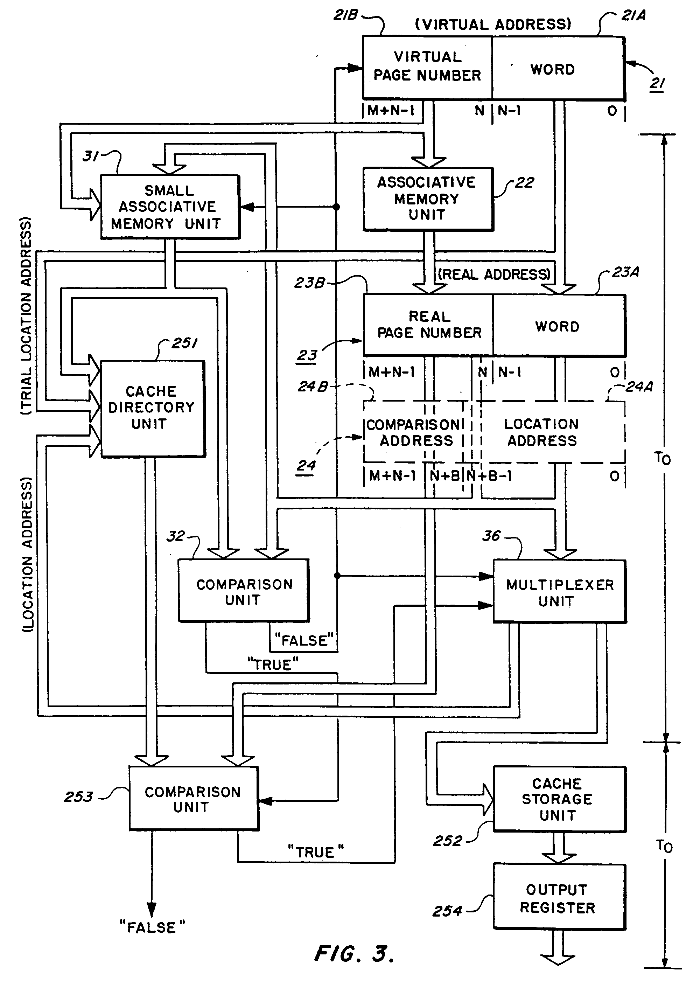

Referring now to Fig. 3, the functional block diagram of the apparatus of the present invention is illustrated. Fig. 3 is a redrawing of Fig. 2 with the additional apparatus of the present invention and with the components of the cache memory unit arranged to emphasize the signal flow. The central processing unit provides a VIRTUAL PAGE NUMBER PORTION 21B address in register 21 to the address translation apparatus represented by associative memory unit 22. Simultaneously, the VIRTUAL PAGE NUMBER 21B or a portion thereof is applied to small associative memory unit 31. The small associative memory 31, responsive to at least a portion of the virtual address, has a relatively small number of directly accessed storage locations provident relatively small signal groups, thereby permitting identification of an associated signal group without significant delay. The signal group developed by the small associative memory unit 31 contains a trial signal group to complete, along with the WORD portion 21A, a TRIAL LOCATION ADDRESS. The TRIAL LOCATION ADDRESS is applied to address in terminals of the cache directory unit 251. The contents of the cache directory unit 251 determined by the TRIAL LOCATION ADDRESS are sent to comparison unit 253. Simultaneously, the application of the VIRTUAL PAGE NUMBER 21B to the associative memory unit 22 results in the storage of the REAL PAGE NUMBER 23B in appropriate locations of register 23. The portion of the REAL PAGE NUMBER 23B that forms part of the LOCATION ADDRESS 24A is applied to comparison unit 32 and compared with the signal group from the small associative memory unit 31. A positive comparison from comparison unit indicates that the correct location in the cache directory unit 251 has been addressed by the TRIAL LOCATION ADDRESS. The portion of the REAL PAGE NUMBER 23B that is the COMPARISON ADDRESS is applied to the comparison unit 253 and compared with the contents from the cache directory unit, the comparison unit 253 being enabled by TRUE signal (or positive comparison from the comparison unit 32). When the two quantities applied to the enabled comparison unit 253 are not the same, then a FALSE signal is generated and applied to the central processing unit. The FALSE signal from comparison unit 253 indicates that the signal group required by the data processing unit is not stored in the cache storage unit 252 and the required signal group must be retrieved from the main memory unit. When the enabled comparison unit 253 issues a TRUE signal, then multiplexer unit 36, which has the LOCATION ADDRESS applied thereto has the LOCATION ADDRESS applied to the address in terminals of the cache storage unit 252. The result of the application of the LOCATION ADDRESS is to apply the required signal group to the output register 354. The cache storage locations contain only one signal group and, therefore, an output multiplexer is not required.

When the comparison unit 32 provides a FALSE signal, indicating that the TRIAL LOCATION ADDRESS is not the correct LOCATION ADDRESS, as a result of the comparison operation, the FALSE signal is applied to multiplexer unit 36. By the time of the generation of the FALSE signal from comparison unit 32, the correct LOCATION ADDRESS 24A is available in register 23. As a result of the application of the FALSE signal to multiplexer unit 36, the LOCATION ADDRESS 24A is applied to address in terminals of the cache directory unit 251. The location addressed as a consequence of the application of the LOCATION ADDRESS are entered in comparison unit 253 and compared with the COMPARISON ADDRESS 24B. As a result of this comparison, a FALSE signal will indicate to the central processing unit that the required data signal group is not stored in the cache memory unit 25 while a TRUE signal causes the LOCATION ADDRESS to be applied (from multiplexer unit 36) to the address in terminals of cache storage unit 252 and the required signal group to be applied to output register 254.

A second FALSE signal is shown originating from the comparison unit 32. The signal is used to freeze the contents of the data signal group in register 21 and register 23 in order that a second access of the cache directory unit can be accomplished without interference from the next virtual address signal group. When this FALSE signal is generated, the small associative memory 32 is updated by storing the portion of the REAL PAGE NUMBER 23B that is included in the LOCATION ADDRESS at a location determined by the VIRTUAL PAGE NUMBER.

The operation of the cache directory and the operation of the virtual to real address translation, which operations are performed in parallel, can be implemented in one system clock cycle T₀, while the withdrawal of the required signal group can be performed in the next consecutive cycle T₀.

### 2. Operation of the Preferred Embodiment

The effectiveness of the present invention relies on the fact that a software program will typically reference signal groups in only a few memory data pages for extended portions of the program. As a result, only a limited number REAL PAGE NUMBER 23B signal groups will be required. Therefore, a small associative cache memory unit (31) can accommodate REAL PAGE NUMBER portions of the memory data pages currently being accessed by the central processing unit. (It will be clear that the entire VIRTUAL PAGE NUMBER 21B need not be applied to small associative memory unit 31 and that a portion thereof can be sufficient). Thus, the small associative memory unit permits an assumption to be made concerning the results of the virtual to real address translation. The contents of the small associative storage unit 31 can be determined, in the preferred embodiment, by entering the b signal bits from the REAL PAGE NUMBER into the location addressed by the VIRTUAL PAGE NUMBER. To the extent that the central processing unit continues to reference the same or relatively few virtual page numbers for extended periods of a procedure, the small associative memory will provide an accurate TRIAL ADDRESS, thereby enhancing performance.

The invention uses two system clock cycles, i.e., 2·T₀, similar to the prior art implementation illustrated in Fig. 2. However, the cache memory unit 25 is pipelined such that a wrong assumption concerning the LOCATION ADDRESS portion derived from the VIRTUAL PAGE NUMBER (i.e., via the small associative memory unit 31) results in the cache memory unit retrieval cycle while a series of correct assumptions permits a signal group to be retrieved from the cache memory unit every system clock cycle T₀.

The disclosed apparatus has the further advantage that the implementing apparatus is relatively simple and can be conveniently included with cache memory unit. In addition, the appropriate level signal group of the plurality of levels of signal groups typically associated with each cache storage level address can be selected so that only the required signal group need be transferred to the central processing unit.

## Claims

1. A cache memory unit (12) for holding data units to be supplied when data units are requested from the main memory (13) of a data processing system; said system including a processor (14) of said system which, when requesting a data unit stored in said main memory, supplies a virtual address of the main memory location in which said data unit is considered to be stored; wherein said cache unit includes an associative memory (22), an addressable data store (252) and an addressable directory (251) said associative memory for translating said virtual address to a corresponding real address, said data store (252) and directory (251) being addressed by a portion of said real address, said directory (251) for holding another real address portion in each storage location thereof, said data store (252) for holding a data unit in each storage location thereof which data unit is considered to be a copy of a data unit stored in the main memory location whose address is the combination of the address of said data store location and the real address portion held in the corresponding directory location;
a storage unit (31) for holding a real address part in each of a plurality of storage locations thereof and for delivering the contents of one of said storage locations upon receipt of an input address thereby;
means for applying as a trial address to said directory (251) at least the real address part delivered by said storage unit (31); and
a comparator (32) for comparing the real address part delivered by said storage unit (31) with the corresponding real address part generated by said associative memory (22);
whereupon, if said comparator (32) detects equality between the two real address parts compared thereby, said comparator (32) delivers a first signal to cause said cache memory unit (12) to proceed using the address portion delivered by said directory (251) in response to the trial address applied to said directory (251),
said cache memory unit (12) being characterized by:
means for applying as an input address to said storage unit (31) at least selected bits of the virtual address received by said cache memory unit (12).

2. Cache memory unit in accordance to claim 1, further characterized by:
said virtual address supplied by said processor (14) including at least a first portion (n bits, bits 0 to n - 1) and a second portion (m bits, bit n to bit m + n - 1);
said associative memory (22) for translating said second virtual address portion to second and third real address portions having together the same number of bits as the second portion of the virtual address, said first address portions of said virtual and real addresses being respectively the same;
said data store (252) and said directory (251) being addressed by the combination of said first and second real address portions; said directory (251) being further addressed by an address comprising the real address portion delivered by said storage unit (31) and said first virtual address portion; and
the selected bits applied as in input address to said storage unit (31) being selected bits of said second virtual address portion.

3. Cache memory unit in accordance to claim 1, further characterized by:
if said comparator (32) detects inequality between the two real address parts compared thereby, said comparator (32) delivers a second signal to cause said real address delivered by said associative memory (22) to be applied as an address to said directory (251) in lieu of said trial address.

4. Cache memory unit in accordance to claim 1, further characterized in that said storage unit (31) is an addressable memory.

5. Method for retrieving a signal group in a cache memory unit comprising an addressable data store (252) and an addressable directory (251), said signal group being stored at a location determined by an associated real address by a central processing unit identifying said signal group by a virtual address, said method comprising the following steps:
(a) accessing a storage unit (31) which holds a real address part of previous accesses to the cache in each of a plurality of storage locations thereof;
(b) applying to said storage unit (31) an input address which consists of at least selected bits of the virtual address;
(c) applying as a trial address to the cache directory unit (251) at least a real address part delivered by said storage unit (31) upon receipt by the latter of said input address, to obtain an address portion stored in said cache directory unit (251);
(d) translating (22) said virtual address to a corresponding real address;
(e) comparing (32) said trial address with part of the corresponding translated real address; and
(f) when said comparing step is positive, delivering a first signal to cause said cache memory unit to proceed to retrieve said signal group from said data store (252) using the address portion delivered by said directory unit (251) in response to said trial address applied to said cache directory unit (251).

## Patentansprüche

1. Cache-Speichereinheit (12) zum Halten von zuzuführenden Dateneinheiten, wenn Dateneinheiten vom Hauptspeicher (13) eines Datenverarbeitungssystems angefordert werden; wobei das System einen Prozessor (14) des Systems aufweist, welches, wenn es eine im Hauptspeicher gespeicherte Dateneinheit anfordert, eine virtuelle Adresse derjenigen Stelle im Hauptspeicher zuführt, an der die Dateneinheit gespeichert werden soll; worin die Cache-Einheit einen Assoziativspeicher (22), einen adressierbaren Datenspeicher (252) und ein adressierbares Verzeichnis (251) enthält, wobei der Assoziativspeicher zum Übersetzen der virtuellen Adresse in eine entsprechende reale Adresse, wobei der Datenspeicher (252) und das Verzeichnis (251) von einem Teil der realen Adresse adressiert werden, das Verzeichnis (251) zum Halten eines anderen realen Adressenteils an jeder Speicherstelle hiervon dient, der Datenspeicher (252) zum Halten einer Dateneinheit an jeder Speicherstelle hiervon, welche Dateneinheit betrachtet wird als eine Kopie einer Dateneinheit, gespeichert an derjenigen Stelle im Hauptspeicher, deren Adresse die Kombination der Datenspeicherstelle und des realen Adressenteils, der an der entsprechenden Verzeichnisstelle gehalten wird, ist;
eine Speichereinheit (31) zum Halten eines realen Adressenteils an jeder einer Mehrzahl von Speicherstellen hiervon und zum Liefern der Inhalte einer der Speicherstellen auf Empfang einer Eingabeadresse hierdurch;
Vorrichtung zum Anwenden als eine Versuchs-Adresse (trial address) auf das Verzeichnis (251) mindestens des realen Adressenteils, der von der Speichereinheit (31) geliefert wird; und
ein Komparator (32) zum Vergleichen des realen Adressenteils, der von der Speichereinheit (31) geliefert wird, mit dem entsprechenden realen Adressenteil, der vom Assoziativspeicher (22) generiert wird;
worauf, wenn der Komparator (32) Gleichheit zwischen den beiden realen Adressenteilen, hierin verglichen, feststellt, der Komparator (32) ein erstes Signal liefert, um die Cache-Speichereinheit (12) zu veranlassen, fortfährt, den Adressenteil zu verwenden, der von dem Verzeichnis (251) als Antwort auf die Versuchsadresse, die auf das Verzeichnis (251) angewandt wurde, geliefert wurde;
wobei diese Cache-Speichereinheit (12) gekennzeichnet ist durch eine Einrichtung zum Anwenden als eine Eingabeadresse für die Speichereinheit (31) mindestens der ausgewählten Bits der virtuellen Adresse, empfangen durch die Cache-Speichereinheit (12).

2. Cache-Speichereinheit nach Anspruch 1, weiterhin gekennzeichnet durch:
die virtuelle Adresse, bereitgestellt vom Prozessor (14) enthält mindestens einen ersten Teil (n Bits, Bits 0 bis n - 1) und einen zweiten Teil (m Bits, Bit n bis Bit m + n - 1);
den Assoziativspeicher (22) zum Übersetzen des zweiten virtuellen Adressenteils in einen zweiten und dritten realen Adressenteil, wobei diese realen Adressenteile zusammen dieselbe Bitzahl wie der zweite Teil der virtuellen Adresse haben, die ersten Adressenteile der virtuellen und realen Adressen sind jeweils die gleichen;
der Datenspeicher (252) und das Verzeichnis (251) werden durch die Kombination der ersten und zweiten realen Adressenteile adressiert;
das Verzeichnis (251) wird weiterhin adressiert durch eine Adresse, welche den realen Adressenteil, geliefert von der Speichereinheit (31), und den virtuellen Adressenteil umfaßt; und
die gewählten Bits, angewandt als eine Eingabeadresse für die Speichereinheit (31), sind die ausgewählten Bits des zweiten virtuellen Adressenteils.

3. Cache-Speichereinheit nach Anspruch 1, weiter gekennzeichnet dadurch, daß,
wenn der Komparator (32) Ungleichheit zwischen den beiden realen Adressenteilen, hierdurch verglichen, feststellt, dieser Komparator (32) ein zweites Signal liefert, um zu bewirken, daß die reale Adresse, geliefert vom Assoziativspeicher (22), als Adresse für das Verzeichnis (251) anstelle der Versuchsadresse verwendet wird.

4. Cache-Speichereinheit nach Anspruch 1, weiter gekennzeichnet dadurch, daß die Speichereinheit (31) ein adressierbarer Speicher ist.

5. Verfahren zum Auslesen einer Signalgruppe in einer Cache-Speichereinheit, die einen adressierbaren Datenspeicher (252) und ein adressierbares Verzeichnis (251) enthält, wobei die Signalgruppe an einer Stelle gespeichert ist, die mittels einer zugeordneten realen Adresse durch eine zentrale Verarbeitungseinheit, welche die Signalgruppe mittels einer virtuellen Adresse identifiziert, bestimmt wird, wobei das Verfahren die folgenden Schritte aufweist:
(a) Zugreifen auf eine Speichereinheit (31), die einen realen Adressenteil von vorangegangenen Zugriffen auf den Cache in jeder einer Mehrzahl von Speicherstellen hiervon enthält;
(b) Anwenden auf die Speichereinheit (31) einer Eingabeadresse, die mindestens aus ausgewählten Bits der virtuellen Adresse besteht;
(c) Anwenden als eine Versuchsadresse auf die Cache-Verzeichniseinheit (251) mindestens eines realen Adressenteils, geliefert von der Speichereinheit (31) auf Empfang der Eingabeadresse durch letztere, um einen Teil der Adresse, gespeichert in der Cache-Verzeichniseinheit (251), zu erhalten;
(d) Übersetzen (22) der virtuellen Adresse in eine entsprechende reale Adresse;
(e) Vergleichen (32) der Versuchsadresse mit einem Teil der entsprechenden übersetzten realen Adresse; und
(f) wenn der Vergleichsschritt positiv ist, Liefern eines ersten Signals, um die Cache-Speichereinheit zu veranlassen fortzufahren, um die Signalgruppe vom Datenspeicher (252) auszulesen, wobei sie den von der Verzeichniseinheit (251) als Antwort auf die Versuchsadresse, angewandt auf die Cache-Verzeichniseinheit (251), gelieferten Adressenteil benutzt.

## Revendications

1. Unité d'antémémoire (12) pour maintenir des unités de données à fournir quand des unités de données sont demandées depuis la mémoire centrale (13) d'un système de traitement de données, ledit système incluant une unité centrale (14) dudit système qui, lorsqu'elle demande une unité de données stockée dans ladite mémoire centrale, fournit une adresse virtuelle de l'emplacement en mémoire centrale dans lequel ladite unité de données est considérée comme étant stockée, où ladite unité d'antémémoire comprend une mémoire associative (22) ; une mémoire de données adressable (252) et un répertoire adressable (251), ladite mémoire associative servant à la traduction de ladite adresse virtuelle en une adresse réelle correspondante, ladite mémoire de données (252) et ledit répertoire (251) étant adressés par une partie de ladite adresse réelle, ledit répertoire (251) servant au maintien d'une autre partie d'adresse réelle dans chacun de ses emplacements de mémoire, ladite mémoire de données (252) servant au maintien d'une unité de données dans chacun de ses emplacements de mémoire, cette unité de données étant considérée comme étant une copie d'une unité de données stockée dans l'emplacement de mémoire centrale dont l'adresse est la combinaison de l'adresse dudit emplacement de mémoire de données et de la partie d'adresse réelle maintenue dans l'emplacement de répertoire correspondant ; une unité de mémoire (31) pour maintenir une partie d'adresse réelle dans chacun d'une pluralité d'emplacements de mémoire de celle-ci et pour délivrer le contenu de l'un desdits emplacements de mémoire à la réception d'une adresse d'entrée par celle-ci ; un moyen pour appliquer comme adresse d'essai audit répertoire (251), au moins la partie d'adresse réelle délivrée par ladite unité de mémoire (31) ; et un comparateur (32) pour comparer la partie d'adresse réelle délivrée par ladite unité de mémoire (31) à la partie d'adresse réelle correspondante engendrée par ladite mémoire associative (22) ;
dans laquelle, si ledit comparateur (32) détecte une égalité entre les deux parties d'adresse réelle comparées par celui-ci, ledit comparateur (32) délivre un premier signal pour faire en sorte que ladite unité d'antémémoire (12) exécute un traitement en utilisant la partie d'adresse délivrée par ledit répertoire (251) en réponse à l'adresse d'essai appliquée audit répertoire (251),
ladite unité d'antémémoire (12) étant caractérisée par :
un moyen pour appliquer comme adresse d'entrée à ladite unité de mémoire (31) au moins des bits sélectionnés de l'adresse virtuelle reçue par ladite unité d'antémémoire (12).

2. Unité d'antémémoire selon la revendication 1, caractérisée en outre par :
ladite adresse virtuelle fournie par ladite unité centrale (14) incluant au moins une première partie (n bits, des bits 0 à (n-1)) et une deuxième partie (m bits, d'un bit n à un bit (m+n-1)) ;
ladite mémoire associative (22) pour traduire ladite deuxième partie d'adresse virtuelle en deuxième et troisième parties d'adresse réelle ayant ensemble le même nombre de bits que la deuxième partie de l'adresse virtuelle, lesdites premières parties d'adresse desdites adresses virtuelle et réelle étant respectivement identiques ;
ladite mémoire de données (252) et ledit répertoire (251) étant adressés par la combinaison desdites première et deuxième parties d'adresse réelle, ledit répertoire (251) étant en outre adressé par une adresse comprenant la partie d'adresse réelle délivrée par ladite unité de mémoire (31) et ladite première partie d'adresse virtuelle ; et,
les bits sélectionnés appliqués comme adresse d'entrée à ladite unité de mémoire (31) étant des bits sélectionnés de ladite deuxième partie d'adresse virtuelle.

3. Unité d'antémémoire selon la revendication 1, caractérisée en outre en ce que :
si ledit comparateur (32) détecte une inégalité entre les deux parties d'adresse réelle comparées par celui-ci, ledit comparateur (32) délivre un second signal pour faire en sorte que ladite adresse réelle délivrée par ladite mémoire associative (22) soit appliquée comme adresse audit répertoire (251) au lieu de ladite adresse d'essai.

4. Unité d'antémémoire selon la revendication 1, caractérisée en outre en ce que ladite unité de mémoire (31) est une mémoire adressable.

5. Procédé pour extraire un groupe de signaux dans une unité d'antémémoire comprenant une mémoire de données adressable (252) et un répertoire adressable (251), ledit groupe de signaux étant stocké à un emplacement déterminé par une adresse réelle associée par une unité centrale de traitement identifiant ledit groupe de signaux par une adresse virtuelle, ledit procédé comprenant les étapes suivantes :
(a) accès à une unité de mémoire (31) qui maintient une partie d'adresse réelle d'accès précédents à l'antémémoire dans chacun d'une pluralité d'emplacements de mémoire de celle-ci ;
(b) application à ladite unité de mémoire (31) d'une adresse d'entrée qui est composée au moins de bits sélectionnés de l'adresse virtuelle ;
(c) application comme adresse d'essai à l'unité répertoire d'antémémoire (251) d'au moins une partie d'adresse réelle délivrée par ladite unité de mémoire (31) à la réception par cette dernière de ladite adresse d'entrée, pour obtenir une partie d'adresse stockée dans ladite unité de répertoire d'antémémoire (251) ;
(d) traduction (22) de ladite adresse virtuelle en une adresse réelle correspondante ;
(e) comparaison (32) de ladite adresse d'essai à une partie de l'adresse réelle traduite correspondante ; et,
(f) quand ladite étape de comparaison est positive, délivrance d'un premier signal pour faire en sorte que ladite unité d'antémémoire exécute un traitement pour extraire ledit groupe de signaux de ladite mémoire de données (252) en utilisant la partie d'adresse délivrée par ladite unité de répertoire (251) en réponse à ladite adresse d'essai appliquée à ladite unité de répertoire d'antémémoire (251).
